Europäisches Patentamt

European Patent Office

Office européen des brevets

(11) Veröffentlichungsnummer: **0 457 162 A1**

# (12) EUROPÄISCHE PATENTANMELDUNG

(21) Anmeldenummer: 91107418.5

(22) Anmeldetag: 07.05.91

(51) Int. Cl.⁵: **B65D 81/12**

(30) Priorität: 16.05.90 DE 4015768

(43) Veröffentlichungstag der Anmeldung:
21.11.91 Patentblatt 91/47

(84) Benannte Vertragsstaaten:
AT BE CH DE DK FR IT LI LU NL

(71) Anmelder: NESTLER WELLPAPPE GmbH
Postfach 1905
W-7630 Lahr/Schwarzwald(DE)

(72) Erfinder: Heitele, Walter
Weiertsfeld 30
W-7632 Friesenheim(DE)
Erfinder: Labusga, Hans-Jörg
Schlehenweg 20
W-7630 Lahr(DE)

(74) Vertreter: Klingseisen, Franz, Dipl.-Ing. et al
Dr. F. Zumstein Dipl.-Ing. F. Klingseisen
Bräuhausstrasse 4
W-8000 München 2(DE)

(54) **Füllmaterial für Hohlräume in Verpackungen.**

(57) Es wird ein Füllmaterial zum Auffüllen von Hohlräumen in Verpackungen, wie Schachteln, Kartons und dgl. aus schüttfähigen Formstücken vorgesehen, bei dem zur einfachen Herstellung und umweltschonender Entsorgung die Formstücke aus Holzfasermaterial, insbesondere Wellpappe, bestehen.

Fig. 1
a) b) c) d) e) f) g)

EP 0 457 162 A1

Die Erfindung betrifft ein Füllmaterial zum Auffüllen von Hohlräumen, die in Verpackungen, wie Schachteln, Kartons und dgl. verbleiben, wenn bspw. ein zu verpackender Gegenstand den Hohlraum der Verpackung nicht vollständig ausfüllt.

Es ist bekannt, für diesen Zweck Polystyrol-Chips zu verwenden, die sich zwar gut als Polster- und Füllmaterial eignen, aber nicht umweltschonend entsorgt werden können, weil dieses Material nicht verrottet und beim Verbrennen Schadstoffemissionen auftreten.

Der Erfindung liegt die Aufgabe zugrunde, ein Füllmaterial der eingangs angegebenen Art so auszubilden, daß es einfach hergestellt und umweltschonend entsorgt werden kann, wobei es bequem handhabbar sein und eine gute Polsterwirkung in der Verpackung ergeben soll.

Diese Aufgabe wird erfindungsgemäß gelöst durch Formstücke aus Faserstoffmaterial, wie Papier, Pappe und insbesondere Wellpappe, wobei die einzelnen flächigen Formstücke vorzugsweise wenigstens einen Vorsprung oder einen Ausschnitt aufweisen, durch den sich eine vorstehende Kante ergibt, die beim Schütten dieses Füllmaterials zum Verhaken mit anderen Formstücken führt und damit eine ungleichmäßige, voluminöse Verteilung dieser flächigen Formstücke ergibt.

Die flächigen Formstücke können bspw. aus Wellpappe in einfacher Weise durch Stanzen hergestellt werden und sie können auch leicht wieder entsorgt werden, da sie leicht verrotten oder ohne Abgabe von Schadstoffen verbrannt werden können. Ferner können sie durch Altpapierrecycling wieder verarbeitet werden. Durch die auf Grund der Formgebung dieser Formstücke sich ergebende ungleichmäßige und voluminöse Anordnung wird eine gute Polsterwirkung für den Transportschutz erreicht, wobei durch ein derartiges Füllmaterial auch eine gute Schall- und Wärmedämmung erzielt wird. Ferner sind die Formstücke aus Wellpappe oder dgl. schüttfähig, so daß sich auch eine bequeme Handhabung ergibt.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgend an Hand der Zeichnung näher erläutert. Es zeigen

Fig. 1     verschiedene Ausführungsformen von Formstücken, die aus Wellpappe ausgestanzt sind,

Fig. 2     eine perspektivische Ansicht eines verformten flächigen Formstückes, und

Fig. 3     Ausführungsbeispiele von Formstücken mit aus der Fläche vorstehenden Teilen.

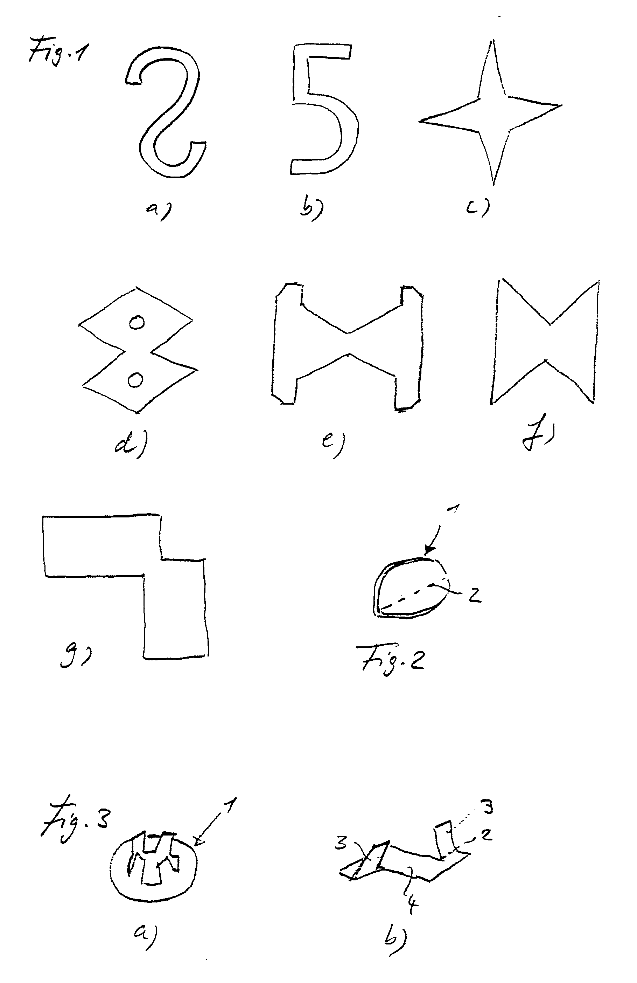

Fig. 1 zeigt verschiedene durch Ausstanzen aus einer Wellpappebahn hergestellte Formstücke, die jeweils auf ihrem Umfang wenigstens einen Vorsprung oder einen Ausschnitt aufweisen, damit diese Formstücke beim Schütten sich gegenseitig verhaken und unregelmäßig relativ zueinander anordnen, so daß sich eine voluminöse Packung mit guter Polsterwirkung ergibt.

Fig. 1a zeigt ein Formstück in Form des Buchstabens S, wobei die Enden des Wellpappestreifens Vorsprünge bilden und Ausschnitte zum Verhaken vorhanden sind. Eine ähnliche Ausgestaltung zeigt Fig. 1b in Form einer Ziffer 5.

Fig. 1c zeigt ein etwa sternförmiges Formstück und Fig. 1d ein Formstück aus zwei zusammenhängenden Rauten, wobei wiederum die auf dem Umfang vorstehenden Abschnitte zum Verhaken mit anderen Formstücken vorgesehen sind. Fig. 1e und 1 f zeigen Ausführungsbeispiele entsprechend dem nach Fig. 1d, wobei andere geometrische Figuren aneinanderhängen, bspw. zwei Dreiecke nach Fig. 1f, während nach Fig. 1e zusätzlich noch Absätze an den Dreiecksflanken vorgesehen sind.

Fig. 1g zeigt eine Formgebung, bei der im wesentlichen zwei Rechtecke an einer Ecke aneinanderhängen, so daß sich wie bei den Ausführungsbeispielen nach den Fig. 1d bis 1f eine schmale Stelle ergibt, die bei der Handhabung dieser Formstücke leicht abgeknickt oder gefaltet wird, wodurch das unregelmäßige Verhaken der Formstücke untereinander und eine lockere Schüttung begünstigt wird.

Wie die Ausführungsbeispiele nach Fig. 1 zeigen, können die verschiedensten Formgebungen vorgesehen werden, bspw. als Buchstaben, Ziffern oder aneinanderhängende geometische Grundformen, wobei die Darstellung in Fig. 1 nur als eine kleine Auswahl dieser möglichen Formgebungen anzusehen ist.

Fig. 2 zeigt ein flächiges Formstück 1, das bspw. etwa kreisförmig durch Ausstanzen aus einer Wellpappenbahn hergestellt wird und mit einer diagonal verlaufenden Stanz- oder Perforationslinie 2 versehen ist, um die das Formstück 1 beim Stanzvorgang etwas gefaltet wird, so daß sich bspw. ein im Querschnitt etwa L-förmiges Formstück ergibt, wobei einer der beiden in einem Winkel zueinanderliegenden Abschnitte einen Vorsprung zum Verhaken mit anderen Formstücken bildet. Auch bei dieser Ausgestaltung sind die verschiedensten Grundformen für das Formstück 1 möglich.

Fig. 3a zeigt ein scheibenförmiges Formstück 1 mit einer etwa kreuzförmigen Ausstanzung in der Mitte, wobei beim Ausstanzen die nach innen in die Aussparung vorstehenden Laschen aufgebogen werden. In entsprechender Weise sind bei dem Ausführungsbeispiel nach Fig. 3b zwei seitliche Laschen 3 relativ zu einem Mittelabschnitt 4 beim Stanzvorgang aufgebogen.

Als Material für die Formstücke kann zwar auch Papier oder Pappe verwendet werden, vorzugsweise wird aber Wellpappe verwendet, da dieses Material eine bessere Polsterwirkung ergibt. Die Formgebung der Formstücke wird so gewählt, daß die einzelnen Formstücke in einer Verpackung gequetscht und verformt werden können. Auf diese Weise können Hohlräume wirksam ausgefüllt werden, während sich andererseits ein wirksamer Transportschutz ergibt.

Es sind die verschiedensten Abwandlungen möglich. So können die Formstücke auch bspw. streifenförmig ausgebildet sein, wobei diese Streifen eine Wellenform oder eine Mäanderform haben können, damit das gegenseitige Verhaken begünstigt wird. Die Formstücke sind vorzugsweise auf dem Umfang nicht gleichmäßig geformt. Sie können auch mit einer Rillung oder einer Kerbung versehen sein.

Die Formstücke aus Papier oder Wellpappe können imprägniert sein, bspw. gegen Ungezieferfraß, Brennbarkeit und dgl..

**Patentansprüche**

1. Füllmaterial zum Auffüllen von Hohlräumen in Verpackungen, wie Schachteln, Kartons, Kisten und dgl., bestehend aus schüttfähigen Formstücken,
   **dadurch gekennzeichnet,**
   daß die Formstücke aus ein- oder mehrlagigem Papier oder Pappe, insbesondere Wellpappe bestehen, deren Grundmaterial Holzfaser, Zellstoff oder holzfreies Produkt ist.

2. Füllmaterial nach Anspruch 1,
   dadurch gekennzeichnet,
   daß die einzelnen Formstücke wenigstens einen Vorsprung oder einen Ausschnitt aufweisen, durch den sich eine vorstehende Kante zum Verhaken der Formstücke untereinander ergibt.

3. Füllmaterial nach Anspruch 1,
   dadurch gekennzeichnet,
   daß die Formstücke aus aneinanderhängenden Flächenteilen bestehen, die durch einen schmalen, leicht knickbaren Abschnitt miteinander verbunden sind.

4. Füllmaterial nach Anspruch 1,
   dadurch gekennzeichnet,
   daß die einzelnen Formstücke mit Einschnitten oder Faltlinien (2) versehen und längs dieser beim Stanzvorgang gefaltet bzw. abgeknickt sind.

5. Füllmaterial nach Anspruch 1,

dadurch gekennzeichnet,
daß die Formstücke streifenförmig ausgebildet sind, wobei Abschnitte wellenförmig gekrümmt oder abgewinkelt zueinander liegen.

Fig. 1

a)     b)     c)

d)     e)     f)

g)

Fig. 2

Fig. 3

a)     b)

**Europäisches Patentamt**

# EUROPÄISCHER RECHERCHENBERICHT

Nummer der Anmeldung

## EP 91 10 7418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,P | DE-U-8 904 879 (EDM. ROMBERG & SOHN)<br>* Ansprüche 1,5; Abbildungen * | 1-3,5 | B 65 D 81/12 |
| X,Y | DE-U-8 902 748 (SIEMENS AG)<br>* Ansprüche 1-6 * | 1,5,2 | |
| Y,A | DE-U-8 622 069 (PRIENS)<br>* das ganze Dokument * | 2,3 | |
| | | | **RECHERCHIERTE SACHGEBIETE (Int. Cl.5)**<br><br>B 65 D |

Der vorliegende Recherchenbericht wurde für alle Patentansprüche erstellt

| Recherchenort | Abschlußdatum der Recherche | Prüfer |
|---|---|---|
| Den Haag | 14 August 91 | BRIDAULT A.A.Y. |